# EUROPÄISCHE PATENTSCHRIFT

(11) **EP 2 563 696 B1**
(45) Veröffentlichungstag und Bekanntmachung des Hinweises auf die Patenterteilung: **05.10.2016**
(21) Anmeldenummer: 11718973.8
(22) Anmeldetag: 28.04.2011
(51) Int. Cl.: B65G 47/91, B65G 59/00, B65G 59/04

(54) **LAGENGREIFEINRICHTUNG UND HANDHABUNGSEINRICHTUNG**
LAYER GRIPPING DEVICE AND HANDLING DEVICE
DISPOSITIF DE SAISIE DE COUCHES ET DISPOSITIF DE MANIPULATION

(30) Priorität: 28.07.2010 DE 202010008173 U; 28.04.2010 DE 202010005319 U
(43) Veröffentlichungstag der Anmeldung: 06.03.2013
(73) Patentinhaber: AUTEFA Solutions Germany GmbH, 86316 Friedberg (DE)
(72) Erfinder: KNOBLOCH, Peter, 86368 Gersthofen (DE)
(74) Vertreter: Ernicke, Klaus Stefan
(86) Internationale Anmeldenummer: PCT/EP2011/056752
(87) Internationale Veröffentlichungsnummer: WO 2011/135031

(56) Entgegenhaltungen:
- EP-A1- 0 084 479
- EP-A1- 0 269 566
- EP-A2- 0 163 201
- EP-A2- 1 921 029
- DE-A1- 2 330 204
- FR-A1- 2 166 242
- FR-A1- 2 579 190
- GB-A- 1 164 766
- US-A- 4 753 564
- US-A- 5 727 832
- US-A- 5 733 100
- US-A1- 2006 242 785
- US-A1- 2008 193 272

## Beschreibung

Die Erfindung betrifft eine Lagengreifeinrichtung und eine Handhabungseinrichtung für Waren, insbesondere Flaschen, mit den Merkmalen in den Oberbegriffen der selbstständigen Ansprüche.

Eine solche Lagengreifeinrichtung ist aus der
US 2008/0193272 A1 bekannt. Sie weist eine Saugglocke mit einer Haube mit verformbaren oder schwenkbaren Seitenwänden auf, die dicht und ggf. mit Klemmkraft seitlich an eine Warenlage angelegt werden können. Die Haubenöffnung ist kleiner als eine Boden- oder Zwischenlage, die außenseitig über die Haubenränder übersteht. Beim Absenken der Haube über einer Warenlage wird auch ein dichtender Kontakt des unteren Haubenrands mit der überstehenden Boden- oder Zwischenlage hergestellt, die durch den Unterdruck an den Haubenrand angesaugt und außen angelegt wird. In der Haube wird ein Deckel abgesenkt und auf die Warenlage aufgelegt. Die Luft aus der weitgehend dicht angelegten Haube kann zur Erzeugung eines Vakuums in nicht beschriebener Weise abgesaugt werden. Die klemmende Haube und die am Haubenrand außenseitig angesaugte Boden- oder Zwischenlage bilden eine geschlossene dichte Vakuumkammer für den Transport der Warenlage.

Die US 2010/0034633A1 zeigt eine ähnliche Lagengreifeinrichtung mit einer Vakuumhaube, die bewegliche und an eine Warenlage dicht anpressbare Seitenwände sowie eine gelochte Kopfplatte über der Warenlage aufweist und die an eine externe Absaugeinrichtung angeschlossen ist. Über die Kopfplatte wird die Luft aus dem Haubeninnenraum abgesaugt, wobei auch hier eine seitlich überstehende Boden- oder Zwischenlage am Haubenrand angesaugt wird, um eine geschlossene dichte Vakuumkammer für eine Warenlage zu bilden. In der Kopfplatte sind heb- und senkbare Einzelsauger angeordnet, um einzelne Boden- oder Zwischenlagen ohne Waren greifen und transportieren zu können. Die Vakuumhaube kann dadurch eine Zusatzfunktion als Einleger für Boden- oder Zwischenlagen an einem Palettierer haben.

Aus der Praxis kennt man auch haubenlose Lagengreifer mit einzelnen Saugköpfen, z.B. Saugtulpen, für die einzelnen Waren innerhalb einer Warenreihe oder Warenlage.

Eine Handhabungseinrichtung ist aus der WO 99/55604 A1 bekannt. Sie weist mehrere bewegliche Träger zur Aufnahme von jeweils einer Flaschenlage auf. Die Flaschen werden in Reihen von einem Umsetzer mit einem mechanischen Reihengreifer auf den Träger gesetzt und stehen auf dessen Trägerboden auf. Durch mehrere Reihen wird die Flaschenlage gebildet. Der Träger kann zwischengelagert werden. Die Flaschenlage kann an einem Palettierer palettiert und verpackt werden. Der Palettierer weist hierbei einen Lagengreifer mit den vorgenannten Saug- oder Klemmköpfen zur Einzelaufnahme oder Reihenaufnahme der Flaschen auf.

EP0 084479 A1 beschreibt eine gattungsgemäße Lagengreifeinrichtung.

Es ist Aufgabe der vorliegenden Erfindung, eine bessere Lagengreifertechnik und ggf. eine bessere Handhabung für Warenlagen aufzuzeigen.

Die Erfindung löst diese Aufgabe mit den Merkmalen in den selbstständigen Ansprüchen.
Die beanspruchte Lagengreifeinrichtung hat Vorteile für das sichere Erfassen, Transportieren und Handhaben von Waren, insbesondere Warenlagen, mit Unterdruck gegenüber der Umgebung.

Die Haube der Saugglocke hat Übermaß gegenüber der Warenlage und einer Boden- oder Zwischenlage und/oder einer Decklage und kann sie zusammen durch die Haubenöffnung ansaugen und bis zur Flaschen-oder Warenanlage an einer haubeninternen Kopfplatte oder einem Anschlag anheben. Der dabei nach unten vorstehende Haubenrand kann bei der Lagenabgabe als Führungs- und Zentriermittel funktionieren. Durch das Einsaugen kann eine Höhenanpassung stattfinden, wobei für unterschiedlich hohe Waren die gleiche Saugglocke eingesetzt werden kann.

Die Haube führt die Warenlage und den Zwischenboden bzw. die Zwischenlage seitlich und stabilisiert diese. Hierfür können haubenintern eine Positionier- oder Zentriereinrichtung und ggf. eine Sensorik angeordnet sein, wobei letztere den Innendruck der Haube, z.B. im Lagenaufnahmeraum misst und eine Steuerung bzw. Regelung der Saugeinrichtung bzw. des Unterdruckerzeugers ermöglicht.

Die beanspruchte Lagengreifeinrichtung hat einen weiten Einsatzbereich und kann eine Warenlage gemeinsame mit einer oder mit mehreren Lagenabdeckungen an der Oberseite und/oder der Unterseite greifen, transportieren oder handhaben, insbesondere mit einer Decklage oder mit einer Bodenlage bzw. Zwischenlage oder mit einer Decklage und mit einer Bodenlage bzw. Zwischenlage. Dies kann einen Palettier- oder Depalettierprozess vereinfachen und beschleunigen. Die Warenlage kann zusammen mit einer Decklage und/oder mit einer Bodenlage bzw. Zwischenlage in den Haubeninnenraum gesaugt und mit der Saugglocke aufgenommen werden.

Die beanspruchte Lagengreifeinrichtung kann als Palettierer und/oder als Depalettierer eingesetzt werden. Sie kann ferner als Schiebeeinrichtung fungieren, was insbesondere in Verbindung mit einer Depalettierung Vorteile hat. Beim Depalettieren können die Zwischenlagen mitsamt der Warenlage gegriffen und vom Palettenstapel abgenommen werden. Mithilfe einer Schiebeeinrichtung kann anschließend eine Trennung der Warenlage von der Zwischenlage erfolgen, wobei die Saugglocke die Zusatzfunktion eines Lagenschiebers haben kann. Mit dieser Technik kann das Depalettieren schneller, einfacher und sicherer erfolgen, wobei Zwischenlagen separiert und wiederverwendet werden können. Die Zwischenlagen können in einem Kreislauf wandeln und zum Palettieren sowie Depalettieren benutzt werden. Sie können auch in die eingangs genannten Träger rückgeführt werden.

Die Lagengreifeinrichtung flexibilisiert die Handhabungstechnik von Waren, insbesondere Flaschen in einer Flaschenbehandlungsanlage und kann bei multifunktionalen Handhabungseinrichtungen eingesetzt werden. Das schnelle und zuverlässige Handhaben von Flaschenlagen, insbesondere Palettieren und Depalettieren erlaubt in Verbindung mit einem Umsetzer und einem Einleger das Palettieren zu Lieferzwecken, aber auch zu Pufferzwecken und auch das Depalettieren zum Einschleusen oder Rückschleusen von zugeführten oder gepufferten Flaschen in den Behandlungskreislauf. Hierfür ist auch die Nutzung von Trägern und deren Fördervorrichtungen vorteilhaft.

Die Lagengreiftechnik mit Ansaugen einer Bodenlage oder Zwischenlage mitsamt der darauf abgestellten Warenlage hat Vorteile für die sichere Handhabung der Waren. Besondere Vorteile ergeben sich für Flaschen, insbesondere für leere Kunststoffflaschen, die z.B. aus Polyethylenterephthalat, Polyethylen oder dgl. bestehen und die eine begrenzte mechanische Stabilität aufweisen. Die Warenlage und insbesondere die Flaschenlage kann schonend zwischen der Boden- oder Zwischenlage und einer Saugglocke der Lagengreifeinrichtung, insbesondere einer dortigen Kopfplatte, eingespannt und gehalten werden. Durch eine Saugglocke kann ein weitgehend gleicher Druck im Inneren von hohlen Flaschen und in der äußeren Umgebung erzeugt werden, der Deformationen der Flaschen verhindert.

Die Anordnung eines lösbaren Zwischenbodens in einem Träger und das Abstellen einer Warenlage, insbesondere einer Flaschenlage, auf diesem Zwischenboden im Träger hat den Vorteil, dass die Warenlage mit einer Saugglocke schnell, schonend und exakt gegriffen und gehandhabt werden kann, wobei der Zwischenboden mitgenommen wird und zum Abstützen der Warenlage nach unten innerhalb der Saugglocke dient. Der Zwischenboden kann im Falle einer Palettierung dann gleich auch eine Zwischenlage im Palettenstapel bilden. Ein Träger erleichtert das Führen und Kommissionieren der Waren bzw. Flaschen und kann auch zu Lagerzwecken dienen. Eine Lagerung oder Pufferung von Waren bzw. Flaschen kann alternativ über ein Palettieren und Stauen mehrerer Paletten erfolgen.

Die Absaugung und die Erzeugung von Unterdruck in einem Lagenaufnahmeraum in der Haube zum Ansaugen und Halten der Warenlage etc. kann auf verschiedene Weise erfolgen. Dies kann von oben und zusätzlich oder alternativ von der Seite durch eine Saugöffnung in der seitlichen Haubenwand geschehen. Hierfür ist erfindungsgemäß ein seitlicher externer oder interner Bypass vorgesehen. Die Seitenabsaugung ist insbesondere günstig, wenn sich auf der Warenlage eine Lagenabdeckung befindet, wobei beide sicher eingesaugt und gehalten werden können. Die Seitenabsaugung hat aber auch Vorteile für die Führung der Waren in der Warenlage. Sie sichert den Lagenverbund und vermeidet ein unkontrolliertes Hochspringen einzelner Waren, insbesondere Flaschen, in der Warenlage.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Schemadarstellung einer Handhabungseinrichtung in einer Flaschenbehandlungsanlage,
- Figur 2 und 3:: eine schematische Querschnittsdarstellung durch eine Saugglocke in verschiedenen Betriebsstellungen,
- Figur 4 und 5:: schematische und teilweise abgebrochene Längsschnitte durch eine Saugglocke mit Draufsicht auf die Warenlage in verschiedenen Warenpositionen,
- Figur 6 und 7:: eine schematische Seitenansicht einer Lagengreifeinrichtung in der Funktion als Depalettierer und als Schiebeeinrichtung in verschiedenen Betriebsstellungen,
- Figur 8 und 9:: eine Variante der Saugglocke zu Figur 2,
- Figur 10 und 11:: eine Saugglocke in teilweise aufgebrochener perspektivischer Ansicht und Seitenansicht,
- Figur 12:: eine Variante eine Lagengreifeinrichtung in geschnittener Seitenansicht
- Figur 13:: eine geklappte und abgebrochene Ansicht zu Figur 12,
- Figur 14:: eine Variante einer Handhabungseinrichtung in einer Flaschenbehandlungsanlage und
- Figur 15:: eine Positionier- und Zentriereinrichtung.

Die Erfindung betrifft eine Lagengreifeinrichtung (23) zum Handhaben von Waren (3), insbesondere Flaschen. Die Erfindung betrifft ferner eine Handhabungseinrichtung (2) für Waren (3). Außerdem betrifft die Erfindung die jeweils zugehörigen Handhabungsverfahren sowie eine mit einer Handhabungseinrichtung (2) ausgerüstete Anlage (1).

Die Waren (3) bilden das Lagengut und können von beliebiger Art, Zahl und Größe sein. Es handelt sich vorzugsweise um Flaschen oder um andere Hohlkörper. Dies können leere oder gefüllte Flaschen sein. Die Flaschen können auch aus einem beliebig geeigneten Material, z.B. Glas, Kunststoff oder Verbundmaterialien bestehen. Im gezeigten und bevorzugten Ausführungsbeispiel werden leere Kunststoffflaschen gehandhabt, die z.B. aus Polyethylenterephthalat (nachfolgend abgekürzt PET) bestehen und die eine dünne, mechanisch labile Wandung haben. Derartige PET-Flaschen sind z.B. zur Einmalverwendung vorgesehen und werden recycelt. In einer anderen Variante können die PET-Flaschen (3) eine dickere Wandung haben und als Pfandflaschen für eine Mehrfachverwendung vorgesehen sein. In weiterer Abwandlung können die Waren (3) andere, insbesondere quaderförmige Behälter, z.B. Schachteln, Dosen oder dgl. aus Karton, Metall oder dgl. sein.

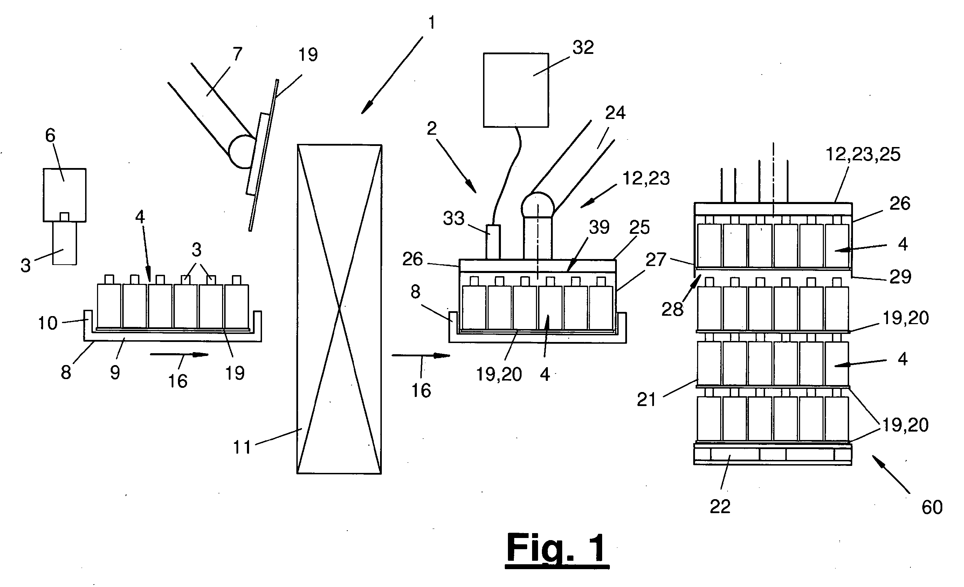

Figur 1 zeigt in einer schematischen Darstellung eine Handhabungseinrichtung (2) in einer Anlage (1). Die Anlage (1) kann z.B. eine Flaschenbehandlungsanlage sein, in der neue Kunststoffflaschen (3), insbesondere PET-Flaschen, hergestellt und verpackt werden. In einer nicht dargestellten Erweiterung können in einer Flaschenbehandlungsanlage (1) die leeren Flaschen auch mit Fluiden, z.B. Getränken, befüllt und etikettiert werden.

In weiterer Abwandlung ist es möglich, der Flaschenbehandlungsanlage (1) anderweitig hergestellte neue Flaschen (3) oder ggf. Altflaschen im Wiederverwertungskreislauf zuzuführen.

In der Variante von Figur 1 weist die Flaschenbehandlungsanlage (1) eingangseitig einen Flaschenerzeuger auf, der der Übersicht halber nicht dargestellt ist. Vom Flaschenerzeuger werden die Flaschen über ein geeignetes Fördermittel, z.B. einen Luftförderer, zu einem schematisch angedeuteten Umsetzer (6) transportiert, der die Flaschen (3) einzeln oder in Reihen greift und auf einen Träger (8) der Handhabungseinrichtung (2) umsetzt. Der Flaschenerzeuger, der Umsetzer (6) und der Träger (8) können z.B. gemäß der WO 99/55604 A1 oder auch der WO 00/69760 A1 ausgebildet sein. Der Umsetzer (6) kann alternativ ein Auspacker sein. Die nachfolgend beschriebene Lagengreifeinrichtung (23) kann alternativ als Reihengreifer ausgebildet sein und als Umsetzer (6) verwendet werden.

Der Träger (8) hat z.B. eine Wannenform und besteht aus einem Trägerboden (9) und einer Seitenwand (10) an mehreren Trägerseiten, wobei die Seitenwand (10) vorzugsweise umlaufend angeordnet ist.

Für den Träger (8) kann eine Fördereinrichtung (16) zu dessen Transport angeordnet sein. Die Träger (8) können ggf. in der Anlage (1) im Umlauf zirkulieren oder reversierend bewegt werden. Bestandteil der Anlage (1) und ggf. der Handhabungseinrichtung (2) kann ferner ein Lager (11) für mehrere Träger (8) sein. Die Träger (8) können innerhalb der Anlage (1) bzw. der Handhabungseinrichtung (2) im Kreislauf zirkulieren. Das Lager (11) kann als Pufferstelle zur kurzzeitigen Aufnahme mehrerer Träger oder Trays (8) dienen. Es kann auch als Regallager oder dgl. mit höherer Aufnahmekapazität ausgebildet sein. Im Lager (11), das ggf. mehrfach vorhanden ist, können leere und/oder befüllte Flaschen (3) gelagert werden.

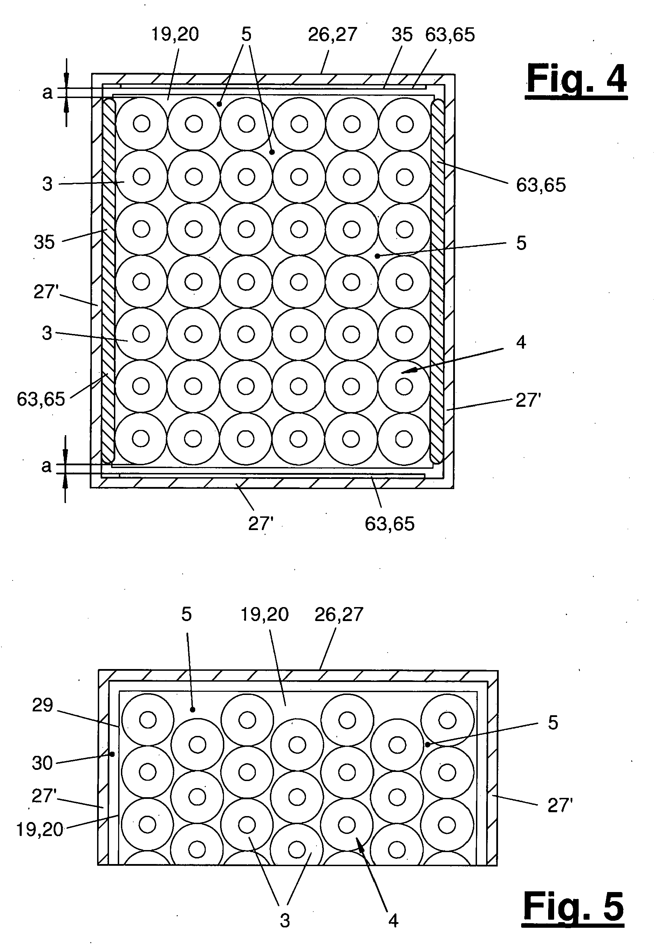

Der Umsetzer (6) bildet auf dem Träger (8) eine Warenlage oder Flaschenlage (4), indem die Flaschen (3) einzeln oder reihenweise nebeneinander gestellt werden. Figur 4 und 5 zeigen in einer Draufsicht verschiedene Lagenmuster. In Figur 4 sind die Flaschenreihen in einer regelmäßigen Matrix mit gerader Reihenbildung in mehreren Reihen längs und quer nebeneinander angeordnet. In der Variante von Figur 5 sind die Flaschenreihen gegenseitig auf Lücke gesetzt und miteinander vernestet, wobei jeweils eine Flasche (3) in den zwischen zwei Flaschen (3) in der anderen Reihe gebildeten Zwickel eintaucht.

In beiden Lagenmustern können zwischen den Flaschen (3) Zwischenräume (5) entstehen. Diese Zwischenräume (5) können für die nachfolgend beschriebene Handhabung der Flaschenlage (4) mit einer Lagengreifeinrichtung (23) von Vorteil sein und können zumindest teilweise beibehalten werden. Unter Umständen können ggf. mitgeführte Führungsmittel, z.B. ein Gitter oder dgl. für die Flaschen (3) in die Zwischenräume (5) eingesetzt werden, wobei diese aber vorzugsweise nicht vollständig ausgefüllt werden. Alternativ können die Flaschen (3) in der Lage (4) dicht gepackt sein, wobei die Zwischenräume (5) verkleinert sind.

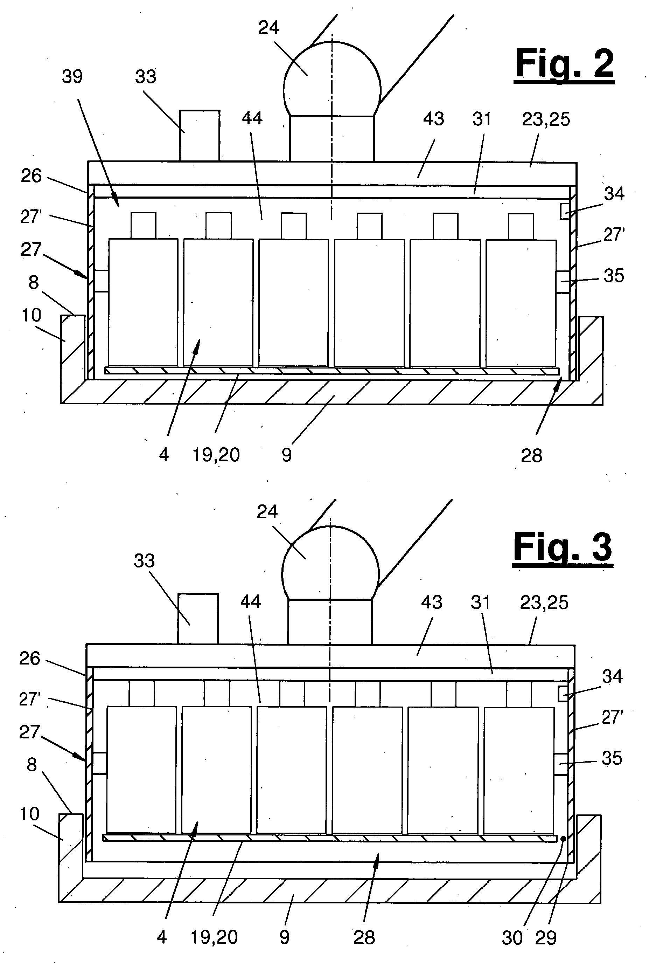

Wie Figur 2, 3 und Figur 8, 9 verdeutlichen, kann im Träger (8) ein beweglicher und vom Träger (8) lösbarer Zwischenboden (19) angeordnet sein, der auf dem Trägerboden (9) plan oder stellenweise aufliegt und auf dem die Warenlage (4) angeordnet wird. Die Flächengröße des Zwischenbodens (19) entspricht im wesentlichen der Flächengröße der Waren- oder Flaschenlage (4) und kann mit dem projizierten Hüllrand der Flaschenlage (4) abschließen. Der Zwischenboden (19) kann auch etwas größer sein und an ein oder mehreren Rändern, vorzugsweise umlaufend, über die Flaschenlage (4) seitlich vorstehen. Der Aufnahmeraum im Träger (8) ist an ein oder mehreren Seiten, vorzugsweise umlaufend an allen Seiten, noch etwas größer, wobei der in den Zeichnungen dargestellte seitliche Abstand zwischen der Warenlage (4) und den Seitenwänden (10) des Trägers (8) entsteht.

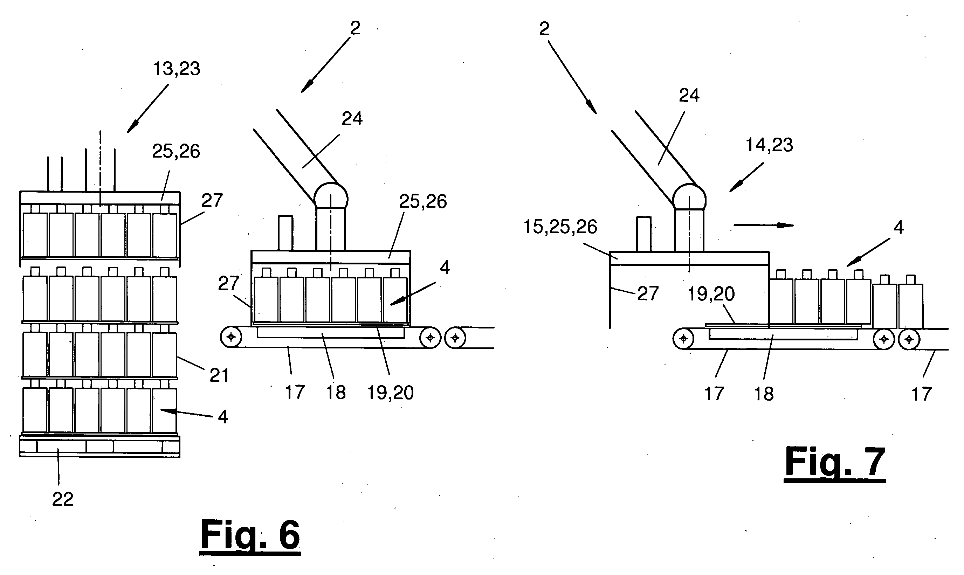

Die Handhabungseinrichtung (2) weist mindestens eine Lagengreifeinrichtung (23) auf, mit der eine Flaschenlage (4) gegriffen und gehandhabt wird. Diese Handhabung kann auf unterschiedliche Weise geschehen. In der Ausführung von Figur 1 ist die Lagengreifeinrichtung (23) als Palettierer (12) ausgebildet und eingesetzt. Figur 6 und 7 zeigen eine Variante, in der die Lagengreifeinrichtung (23) als Depalettierer (13) und ggf. als Schiebeeinrichtung (14) ausgebildet und eingesetzt ist.

In der Ausführungsform von Figur 1 werden mit dem Palettierer (12) bzw. der Lagengreifeinrichtung (23) die befüllten Träger (8) entladen, wobei die Warenlage (4) mitsamt dem Zwischenboden (19) gegriffen und palettiert wird. Hierbei wird auf einem Palettenboden (22) ein Palettenstapel (21) aus mehreren übereinander aufgerichteten Waren- oder Flaschenlagen (4) nebst Zwischenböden (19) gebildet. Der Palettenstapel (21) wird auch in Kurzform als Palette bezeichnet. Die Zwischenböden (19) bilden dabei die bei Paletten (21) üblichen Zwischenlagen (20). Auch in der untersten Lage (4) befindet sich ein Zwischenboden (19), der auch als Bodenlage bezeichnet wird und der auf dem Palettenboden (22) aufliegt. Die Boden- oder Zwischenlagen (20) können eine einheitliche Ausbildung und Größe haben. Nachfolgend werden sie einheitlich als Zwischenlagen (20) angesprochen.

Bei dieser Ausführung ist die separate Zufuhr von Zwischenlagen (20) zum Palettierplatz entbehrlich. Die Handhabungseinrichtung (2) kann einen Einleger (7) aufweisen, der an geeigneter Stelle, z.B. am Umsetzer (6), angeordnet ist und der in die leeren Träger (8) einen Zwischenboden (19) einlegt.

Die Zwischenböden (19) oder Zwischenlagen (20) können aus einem beliebig geeigneten Material bestehen und können eine beliebig geeignete Formgebung haben. Im gezeigten Ausführungsbeispiel sind sie als ebene Platten in Rechteckform ausgebildet und können aus Karton, Kunststoff, Metall oder dgl. bestehen. Alternativ können sie konturierte Oberflächen besitzen, die z.B. vertiefte Aufnahmen für die Böden und Hälse von Flaschen (3) oder von anderen Teilen anderer Waren (3) aufweisen. Die Zwischenböden (19) oder Zwischenlagen (20) können alternativ oder zusätzlich randseitige Abkantungen zur Lagenführung aufweisen. Sie können ferner einen im wesentliche U- oder H- förmigen Querschnitt aufweisen. Die Zwischenböden (19) oder Zwischenlagen (20) können weitgehend biegesteif sein und die Warenlage (4) tragen und abstützen.

Die Lagengreifeinrichtung (23) weist in den verschiedenen Ausführungsbeispielen jeweils einen Lagengreifer (25) und einen Manipulator (24) zu dessen Führung auf. Der Manipulator (24) kann mehrere rotatorische und/oder translatorische Achsen in beliebiger Zahl und Anordnung aufweisen. Er kann z.B. als Portalroboter mit mehreren Linearachsen oder als Gelenkarmroboter mit mehreren rotatorischen Achsen ausgebildet sein. In den Zeichnungen ist jeweils schematisch ein Tragarm des Manipulators (24) dargestellt, der am freien Ende eine starre oder um mindestens eine Rotationsachse drehbewegliche Hand aufweist, die in geeigneter Weise fest oder lösbar mit dem Lagengreifer (25) verbunden ist.

Der Lagengreifer (25) ist als Saugglocke ausgebildet. Die Saugglocke (25) greift in den verschiedenen Ausführungsbeispielen jeweils die Warenlage (4) mitsamt dem Zwischenboden (19) unter Einwirkung eines im Innenraum der Saugglocke (25) gebildeten Unterdrucks. Für dessen Erzeugung ist eine Saugeinrichtung (32) vorgesehen. Sie weist z.B. einen ggf. externen und stationären Unterdruckerzeuger auf, der mittels flexibler Leitungen mit einem Anschluss (33) an der Saugglocke (25) verbunden ist und der die im Glockeninnenraum befindliche Luft absaugt. Der Unterdruckerzeuger (32) kann auch an der Saugglocke (25) angeordnet sein und mitbewegt werden.

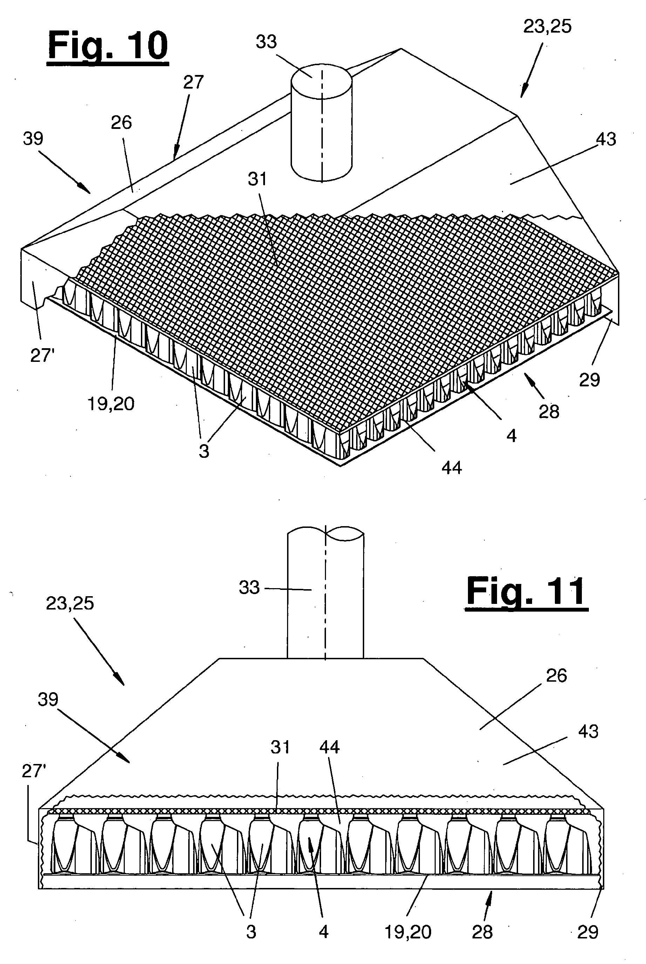

Wie Figur 2,3, 8,9 und 10,11 zeigen, weist die Saugglocke (25) eine Haube (26) auf, die im Kopfbereich ggf. einen Dom hat und die im unteren Bereich eine z.B. umlaufend geschlossene seitliche Haubenwand (27) aufweist, die nach unten hin eine Haubenöffnung (28) freilässt. Die Haubenwand (27) wird von mehreren Seitenwänden (27') gebildet.

Die Seitenwände (27') sind formstabil und bestehen aus einem entsprechend geeigneten Material, z.B. Kunststoff oder Metall. Die Formstabilität kann so groß sein, dass die Seitenwände (27') sich nicht oder zumindest nicht wesentlich durch den im Hauben- oder Glockeninnenraum gebildeten Unterdruck verformen und nach innen in Kontakt zur Warenlage (4) hin wölben. Die Seitenwände (27') können insgesamt oder bereichsweise starr sein und miteinander zu einer rahmenartigen Haubenwandung (27) verbunden sein. Sie können alternativ relativ zueinander beweglich, insbesondere verschiebbar und/oder schwenkbar sein, um sich auf unterschiedliche Haubenformate, insbesondere Flächengrößen und Formen der Haubenöffnung (28) mit entsprechenden Stell- und Steuermitteln einstellen zu lassen. Die Seitenwände (27') sind vorzugsweise luftdicht und verhindern oder zumindest minimieren einen Zutritt von Außenluft durch die Wand in den Haubeninnenraum. Es können aber alternativ auch seitliche Öffnungen, z.B. in einem Eckbereich, vorhanden sein. In der gezeigten einfachen Ausführungsform sind die Seitenwände (27') starr ausgebildet und miteinander verbunden. Sie bilden an der Unterseite einen in gleicher Höhe umlaufenden Haubenrand (29).

Die Saugglocke (25) weist ferner eine interne und in der Haube (26) quer liegend angeordnete Kopfplatte (31) auf, welche die Warenlage (4) übergreift. In der Haube (26) wird unterhalb der Kopfplatte (31) ein Lagenaufnahmeraum (44) mit der Warenlage (4) gebildet. Die seitliche Haubenwand (26) umgibt den Lagenaufnahmeraum (44). Die Saugglocke (25) weist eine Absaugung (39) auf, die unterschiedlich ausgebildet sein kann. In der gezeigten Ausführungsform wird z.B. oberhalb der Kopfplatte (31) ein Saugraum (43) gebildet. Die Absaugung (39) evakuiert den Lagenaufnahmeraum (44) und erzeugt hier einen Unterdruck, mit dem die Warenlage (4) und der Zwischenboden (19) bzw. die Zwischenlage (20) angesaugt und angehoben werden.

Die Kopfplatte (31) kann luftdurchlässig sein. Im gezeigten Ausführungsbeispiel ist die Kopfplatte (31) z.B. als Gitter oder als Lochplatte mit Saugöffnungen (40) ausgebildet und lässt die angesaugte Luftströmung vom Lagenaufnahmeraum (44) zum Saugraum (43) und weiter zum Anschluss (33) durchströmen. Die Saugöffnungen (40) können gleich groß sein. Ihre Größe kann alternativ im Ganzen oder lokal variieren, um unterschiedliche Saugeffekte zu realisieren, die ggf. auch örtlich unterschiedlich sein können.

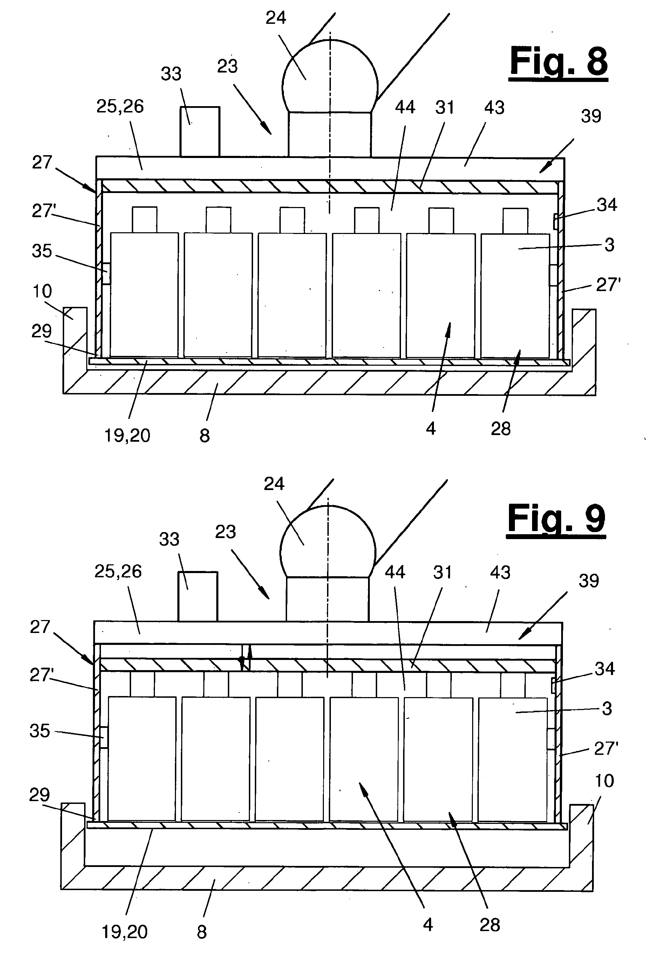

Die Kopfplatte (31) ist in der Ausführungsform von Figur 2,3 und 10,11 starr in der Haube (26) angeordnet. Sie überdeckt die Warenlage (4) sowie den Lagenaufnahmeraum (44) und kann bis zu der seitlichen Haubenwand (27) reichen. In der Variante von Figur 8,9 ist die Kopfplatte (31) höhenverstellbar angeordnet und kann mit einer entsprechenden Stelleinrichtung (nicht dargestellt), die über einen gesteuerten Antrieb verfügt, im Haubeninnenraum gehoben und gesenkt werden. Diese Beweglichkeit wird durch Pfeile in Figur 9 symbolisiert.

Wie Figur 2,3 und 8,9 sowie 10,11 verdeutlichen, greift die Saugglocke (25) die Warenlage (4) mitsamt einem darunter befindlichen beweglichen Boden (19,20) mit einem durch Saugwirkung erzeugten Unterdruck, der niedriger als der äußere Umgebungsdruck ist. Hierbei wird die Warenlage oder Flaschenlage (4) zwischen dem angesaugten Boden (19,20) und der Kopfplatte (31) gehalten und eingespannt. Die Saugglocke (25) hält den Boden (19,20) mit Unterdruck fest, wobei hierüber auch eine Einspannkraft für die Flaschenlage (4) geschaffen werden kann.

Für die Saugglocke (25) und deren Greiffunktion gibt es verschiedene Gestaltungsmöglichkeiten, wobei insbesondere Figur 2,3, 8,9 und 12, 13 verschiedene Varianten verdeutlichen.

In der Ausführungsform von Figur 2 und 3 wird der Zwischenboden (19) bzw. die Zwischenlage (20) zusammen mit der Warenlage (4) in den Haubeninnenraum eingesaugt und angehoben, wobei die Waren- oder Flaschenlage (4) an der Oberseite an der Kopfplatte (31) anschlägt. Die Haubenöffnung (28) ist in diesem Ausführungsbeispiel in ihrer Öffnungsfläche größer als die Flächengröße der Warenlage (4) und auch größer als die Flächengröße des Zwischenbodens (19) bzw. der Zwischenlage (20). Zwischen dem Haubenrand (29) bzw. den Seitenwänden (27') und den Rändern des Zwischenbodens (19,20) kann ein Freiraum (30) bestehen, durch den ggf. von außen Leckluft eingesaugt wird. Dieser Zwischenraum (30) kann so klein gehalten werden, dass die Leckluft den Unterdruck oder Saugdruck im Haubeninnenraum nicht negativ beeinflusst. Der Unterdruckerzeuger (32) kann für einen entsprechend großen Luftdurchsatz ausgebildet sein. Hierbei können die angesaugten Luftströme großvolumig und der Druckunterschied zum Umgebungsdruck sowie der Leistungsbedarf und die Größe des Unterdruckerzeugers (32) entsprechend gering sein.

Am Außenumfang sind die Seitenwände (27') im gezeigten Ausführungsbeispiel von Figur 2 und 3 kleiner als die Öffnungsweite des Trägers (8), sodass die Seitenwände (27') zwischen die Warenlage (4) und den Boden (19) sowie die seitlichen Trägerwände (10) eintauchen können. Eine solche Ausbildung empfiehlt sich, wenn die seitlichen Trägerwände (10) eine signifikante Höhe haben. Wenn die Trägerwände (10) niedriger sind, kann die Haube (26) auch auf den Trägerwänden (10) aufgesetzt werden, wobei die Innenseiten der Seitenwände (27') und der seitlichen Trägerwände (10) im wesentlichen fluchten. Eine Zentrierhilfe kann unterstützend tätig werden.

Durch den im Haubeninnenraum bzw. Lagenaufnahmeraum (44) aufgebauten Unterdruck werden die Flaschenlage (4) und der Zwischenboden (19) bzw. die Zwischenlage (20) angesaugt und im Haubeninnenraum angehoben. Figur 3 zeigt diese Ansaugstellung.

Die Warenlage (4) hat im Lagenaufnahmeraum an allen Seiten einen seitlichen Abstand von der Haubenwand (27), der einen Freiraum bildet. In der Haube (26), insbesondere im Bereich des Lagenaufnahmeraums (44) und im Freiraum, kann eine Positionier- oder Zentriereinrichtung (35) angeordnet sein, die z.B. an ein oder mehreren Seitenwänden (27') angeordnet ist und die mit einem geeigneten,' beweglichen und z.B. leistenförmigen Stellelement (63,64) seitlich gegen einen oder mehrere, insbesondere gegenüberliegende Ränder der Warenlage (4) drückt und die Warenlage (4) innerhalb der Haube (26) positioniert, z.B. zentriert. Figur 4 zeigt eine solche Zentrieranordnung. Hier sind die beiden seitlichen Stell- oder Zentrierelemente (63) ausgefahren und führen seitlich die Warenlage (4). Sie können die Warenlage (4) auch zwischen sich einklemmen. Die oberen und unteren Stell- oder Zentrierelemente (63) sind der Übersicht halber in noch nicht betätigter Grundstellung oder Ruhestellung dargestellt, in der sie einen seitlichen Abstand (a) zur Warenlage (4) haben. Dies ist günstig für ein kollisionsfreies Überstülpen der Haube (26) über eine Warenlage (4). Mit einer Positionier- oder Zentriereinrichtung (35) mit entsprechend großem Zustellweg kann außerdem eine Haube (26) an unterschiedliche Formate von Warenlagen (4) angepasst werden.

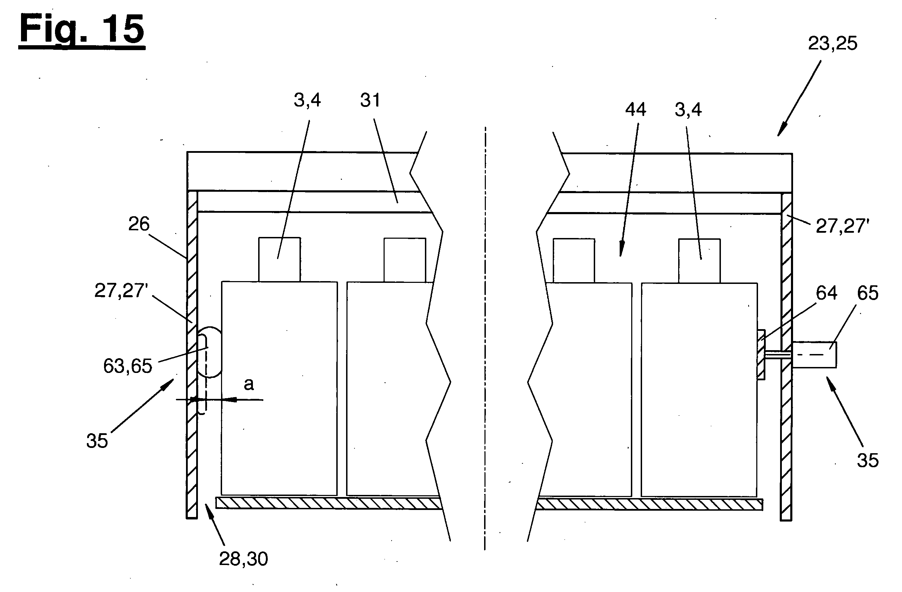

Figur 15 verdeutlicht verschiedene Ausführungsbeispiele einer Positionier- oder Zentriereinrichtung (35) im abgebrochenen Halbschnitt durch eine Saugglocke (25) oder Haube (26). Die Positionier- oder Zentriereinrichtung (35) kann z.B. gemäß der linken Bildhälfte aus einem oder mehreren expansionsfähigen Stellelementen (63) bestehen, die z.B. als aufblasbare Schläuche ausgebildet sind. Figur 15 zeigt die expandierte Arbeitsstellung mit durchgezogenen Strichen sowie die drucklose oder entlastete Ruhestellung in gestrichelter Form, wobei auch der abstand (a) dargestellt ist. Eine Expansion und/oder Volumenvergrößerung von formveränderlichen Stellelementen (63) ist auch auf andere Weise möglich, z.B. durch Magnetkräfte oder elektrostatische Kräfte mit wechselbarer Polung. In einem flexiblen Schlauch oder an einem sonstigen flexiblen Verbindungsmittel kann z.B. eine durchgehende oder unterbrochene Leiste mit einer magnetischen oder elektrostatischen Polung angeordnet sein und mit einem Stellantrieb (65) zusammenwirken, der z.B. als Generator eines elektrischen oder magnetischen Feldes mit wechselbarer Polung und ggf. einstellbarer Feldstärke oder Kraftwirkung, z.B. als steuerbarer Elektromagnet, ausgebildet sein kann und der auf die Leiste wirkende Abstoßkräfte und ggf. Anziehungskräfte erzeugt.

Die Positionier- oder Zentriereinrichtung (35) kann alternativ nach innen bewegliche leistenförmige Stellelemente (64) mit einem geeigneten mechanischen Stellantrieb (65) aufweisen. Die rechte Bildhälfte von Figur 15 zeigt diese Anordnung. Die Stellelemente (64) können z.B. starre oder zumindest stellenweise verformbare Klemmbalken oder dgl. sein. Ein Stellantrieb (65) kann z.B. als Zylinder, als elektrischer Spindel-, Zahnstangen- oder Scherenantrieb oder dgl. ausgebildet sein.

Die Positionier- oder Zentriereinrichtung (35), insbesondere ihr(e) Stellantrieb(e) (65) kann steuerbar oder regelbar sein. Eine Steuerung oder Regelung ist z.B. über den Weg und/oder über die Kraft, insbesondere die von der Warenlage (4) bei Kontakt erzeugte Reaktionskraft, möglich. Eine Messwerterfassung einer geeigneten Steuer- oder Regelgröße ist z.B. mittels einer Druckmessung, Kraftmessung, Abstands- oder Wegmessung, Strom- oder Ladungsmessung oder dgl. möglich.

Im Haubeninnenraum oder Lagenaufnahmeraum (44) kann ferner ein Sensor (34) angeordnet sein, der den im Haubeninnenraum herrschenden Druck misst und der mit einer Steuerung der Saugeinrichtung (32) in Verbindung stehen kann. Die Steuerung kann eine Regelung für den Unterdruckerzeuger (32) aufweisen, sodass der Haubeninnendruck auf Vorgabewerte einstellbar und ggf. regelbar ist. Der Haubeninnendruck kann dabei auf unterschiedliche Werte gesteuert oder geregelt werden.

Beim Ansaugen der Warenlage (4) und dem Boden (19,20) wird der Haubeninnendruck gegenüber dem Umgebungsdruck in einem vorgegebenen Verlauf, z.B. in einer Rampe, gemindert, sodass das Ansaugen und Anheben der Flaschenlage (4) und des Bodens (19,20) in einer weichen Bewegung erfolgt. Beim Ansaugen wird Luft nicht nur aus dem Innenraum der leeren Flaschen (3), sondern auch aus den Zwischenräumen (5) angesaugt, wobei an den Flaschen (3) innenseitig und außenseitig im wesentlichen der gleiche Druck anliegt und die Flaschenwände ihre Form behalten.

Zum Absenken und zur Abgabe der Warenlage (4) und des Bodens (19,20) kann der Innendruck der Haube (26) allmählich wieder erhöht werden, wobei die Warenlage (4) und der Boden (19,20) wiederum in einer weichen Bewegung abgesenkt werden. Die weichen Bewegungen verhindern negative mechanische Einflüsse auf die Warenlage (4) und die Flaschen (3), die dadurch ihre vorgegebene Lage behalten und am Umfallen oder an sonstigen unerwünschten Lageänderungen gehindert werden. Zum Heben und Senken kann die Zentriereinrichtung (35) gelockert oder ggf. auch deaktiviert werden. Die Saugglocke (25) kann die angesaugte Warenlage (4) transportieren und an beliebiger Stelle wieder abgeben. Während des Transports kann die Zentriereinrichtung (35) aktiviert sein.

Eine Abgabe der Waren- oder Flaschenlage (4) kann z.B. bei Figur 1 an einer Palettierstelle (60) erfolgen. Der Haubenrand (29) steht nach unten ein Stück über den angesaugten Boden (19,20) vor. Dieser Überstand kann als Zentrierhilfe benutzt werden und dient auch beim Überstülpen über den Palettenboden (22) oder auf eine bereits palettierte Lage (4) als Begrenzung für angesaugte Leckluft. Bei der Abgabe kann in Verbindung mit einer entsprechend genauen Manipulatorsteuerung der Zwischenboden (19) bzw. die Zwischenlage (20) direkt auf der unteren Waren- oder Flaschenlage (4) im Stapel (21) aufgesetzt werden. Alternativ kann der Boden (19,20) mit etwas Abstand über der bereits palettierten Warenlage (4) schwebend mittels der Saugglocke (25) gehalten werden, wobei anschließend der Unterdruck in der Haube (26) allmählich reduziert wird, wodurch der Boden (19,20) und die Waren- bzw. Flaschenlage (4) bis zur Anlage auf dem Palettierstapel (21) abgesenkt wird. Nach Abbau des Haubenunterdrucks bis auf Umgebungsdruck oder auf einen kleinen Unterdruck kann die Saugglocke (25) von der abgesetzten Waren- oder Flaschenlage (4) abgehoben und zur Ladestelle für die Aufnahme einer neuen Warenlage (4) bewegt werden.

Figur 8,9 zeigen eine Variante der Saugglöcke (25), bei der Haubenöffnung größer als die Grundfläche der Waren- oder Flaschenlage (4) ist und diese seitlich übergreifen kann. Andererseits ist in diesem Fall der Zwischenboden (19) bzw. die Zwischenlage (20) in der Fläche größer als die Haubenöffnung (28), sodass die hier wiederum zwischen die seitlichen Trägerwände (10) eingeführte Habe (26) mit ihrem unteren Haubenrand (29) auf den seitlich über die Lage (4) überstehenden Bodenrandbereichen aufsteht. Bei Erzeugung von Unterdruck in der Haube (26) wird der Boden (19,20) gegen den Haubenrand (29) gedrückt und festgehalten. Zum Einspannen der Lage (4) wird in diesem Fall die Kopfplatte (31) abgesenkt. Das Absenken kann soweit erfolgen, bis die Kopfplatte (31) auf der Lagenoberseite, hier den Flaschenhälsen, aufliegt. In dieser Stellung wird die Kopfplatte (31) fixiert. Der aufgeschaltete Unterdruck hält die Warenlage (4) fest, wobei diese von dem an der Unterseite angesaugten Boden (19,20) nach unten gehalten und nach oben von der Kopfplatte (31) eingespannt ist. Auch in dieser Ausführungsform können eine Positionier- und Zentriereinrichtung (35) und ein Sensor (34) in der Haube (26) angeordnet sein.

Zum Absetzen kann der Boden (19,20) in der vorerwähnten Weise auf einem Untergrund, z.B. der Oberseite der obersten Palettenlage, direkt aufgesetzt werden. Er kann alternativ mit geringem Höhenabstand gehalten und durch allmählichen Abbau des Haubenunterdrucks mitsamt der Lage (4) abgesenkt werden.

Figur 6 und 7 zeigen einen Depalettierer (13), mit dem ein Palettenstapel (21) abgebaut und entladen wird. Die Saugglocke (25) kann dieselbe Ausbildung wie in den vorbeschriebenen Ausführungsbeispielen haben und wird zum Depalettieren über die oberste Lage (4) gestülpt, wobei sie die Zwischenlage (20) übergreifen oder auf der Zwischenlage (20) aufstehen kann. Figur 6 zeigt eine Ausführung, die der vorbeschriebenen Gestaltung von Figur 2 und 3 entspricht.

Die Lagengreifeinrichtung (23) saugt die Waren- oder Flaschenlage (4) mitsamt der Zwischenlage (20) an und transportiert sie unter Aufrechterhaltung des Saugdrucks oder Unterdrucks bis zu einer stationären oder instationären Abgabestelle, die z.B. an einer Fördereinrichtung (17) gebildet sein kann. Hierbei handelt es sich z.B. um einen intermittierend arbeitenden Förderer, z.B. einen Bandförderer. Die Waren- oder Flaschenlage (4) wird in der vorbeschriebenen Weise mitsamt der Zwischenlage (20) auf der Fördereinrichtung (17) abgesetzt und kann dann weitertransportiert werden.

Figur 6 und 7 verdeutlichen eine weitergehende Variante, bei der die Lagengreifeinrichtung (23) zugleich als Schiebeeinrichtung (14) ausgebildet ist, die eine Trennung der Waren- oder Flaschenlage (4) von der Zwischenlage (20) an der Abgabestelle ermöglicht. Hierfür ist eine Halteeinrichtung (18) an der Abgabestelle angeordnet, die z.B. unterhalb der Fördereinrichtung (17) angeordnet ist. Die Halteeinrichtung (18) wirkt auf die Zwischenlage (20) und hält diese fest. Die Halteeinrichtung (18) kann hierfür in beliebig geeigneter Weise ausgebildet sein, z.B. als Saugeinrichtung.

Die Saugglocke (25) kann eine Zusatzfunktion als Lagenschieber (15) haben. Wenn sie nach Druckausgleich von der abgesetzten Lage (4) gelöst wird, kann sie gemäß Figur 7 hinter die Lage (4) bewegt und wieder abgesenkt werden, wobei in einer anschließenden Vorwärtsbewegung die Lage (4) durch die starren Seitenwände (27') der Haube (26) vom festgehaltenen Boden (19,20) abgeschoben und abgegeben wird, z.B. auf einen anschließenden weiteren Förderer (17) zum Abtransport der Lage (4). Hierbei kann ggf. auch eine Vereinzelung der Lage (4) in einzelne Reihen oder einzelne Flaschen oder Waren (3) erfolgen. Der leere Zwischenboden (19) bzw. die Zwischenlage (20) kann in geeigneter Weise entsorgt werden, wobei sie z.B. erneut mit der Saugglocke (25) aufgenommen und abtransportiert wird. Sie kann hierbei auf einem Stapel oder dgl. abgegeben werden. Sie kann alternativ in einen bereitstehenden Träger (8) zurückgelegt werden.

In den gezeigten Ausführungsbeispielen greift die Saugglocke (25) jeweils eine komplette Waren- oder Flaschenlage (4), wobei auch der Zwischenboden (19) bzw. die Zwischenlage (20) eine komplette Flaschenlage aufnimmt. Die Lagengröße kann dabei der Aufnahmefläche eines Trägers (8) bzw. eines Palettenstapels (21) entsprechen. In einer abgewandelten Ausführungsform kann die vorbeschriebene Lage (4) eine Teillage sein. In diesem Fall entspricht z.B. die Flächengröße einer Teillage der Größe einer Palettenlage, wobei der Träger (8) eine Übergröße hat und zwei oder mehr solcher Teillagen nebeneinander aufnehmen kann. Dementsprechend hat jede Teillage auch ihren eigenen Zwischenboden (19) bzw. ihre Zwischenlage (20). Darüber hinaus ist eine weitere Abwandlung mit umgekehrten Größenverhältnissen möglich, wobei die Trägergröße kleiner als eine Palettenlage und insoweit eine Teillage bildet. Mehrere solcher Teillagen können nebeneinander zu einer Palettenlage zusammengesetzt und palettiert werden. Desgleichen funktioniert auch ein Depalettieren in entsprechender Weise. Auch in diesem Fall ist die Bodengröße an die Teillagengröße angepasst. Daneben kann es weitere Konfigurationen von Teillagenbildung geben. Der in den Ausführungsbeispielen benutzte Begriff der Warenlage (4) bezieht sich auch auf solche Teillagen.

Mit einer Teillagenbildung können z.B. gemischte Gebinde in der Palette hergestellt werden. Dies ist z.B. für Displaypaletten von Vorteil, die in jeder ihrer aufgestapelten Lagen (4) ein oder mehrere Waren, insbesondere Flaschen (3) von unterschiedlichen Sorten, beispielsweise unterschiedlichen Getränken, zum Verkauf und zur direkten Entnahme für Kunden präsentieren sollen. Derartige Displaypaletten bilden an der Verkaufsstelle, z.B. in einem Supermarkt, den Verkaufsstapel und ersetzen ein Regal. Derartige Mischgebinde in den Palettenlagen werden auch als Rainbow-Gebinde bezeichnet.

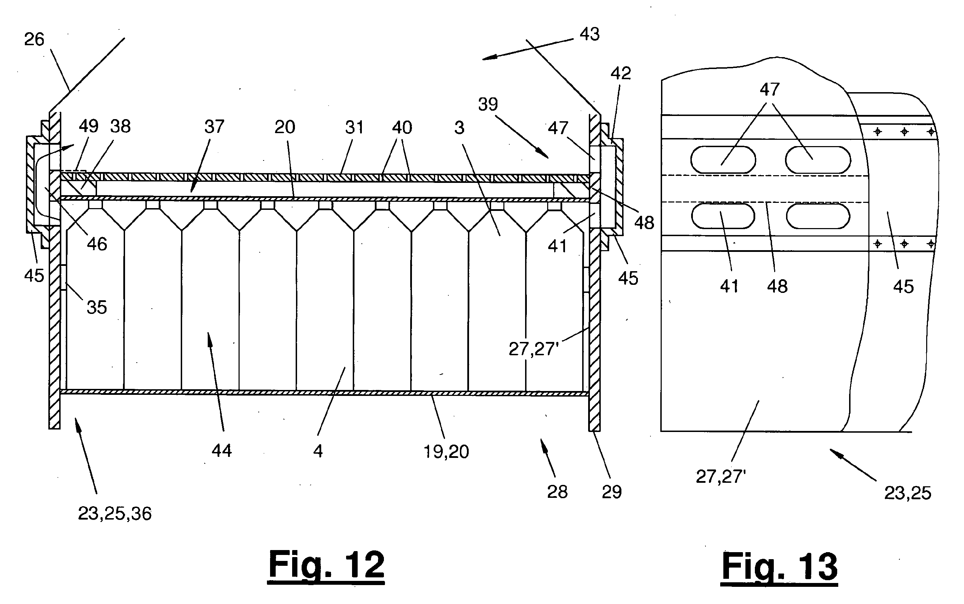

Figur 12 und 13 zeigen eine Variante der Lagengreifeinrichtung (23) und des Lagengreifers bzw. der Saugglocke (25) sowie deren Absaugung (39). Diese Variante ist z.B. in der Lage, zusätzlich zur Waren- oder Flaschenlage (4) und dem ggf. vorhandenen Zwischenboden (19,20) auch eine Lagenabdeckung (37) aufzunehmen und hierfür eine Greifeinrichtung (36) zu bilden. Die Haubenöffnung (28) ist dabei auch größer als die Lagenabdeckung (37). Die Lagenabdeckung (37) kann z.B. aus einer Zwischenlage (20) und einem darauf angeordneten Deckel (38) bestehen und liegt auf der Warenlage (4). Der Deckel (38) kann als Top Frame und als schmaler randseitig umlaufender Rahmen ausgebildet sein, der zur Abstützung einer Stapelumreifung dienen kann und der außenseitig bündig mit der Palettenkontur abschließt. In der Mitte hat der Top Frame (38) eine große Öffnung, wobei hier ggf. versteifende Streben angeordnet sein können.

Die gezeigte Lagengreifeinrichtung (23) kann auch ohne eine solche oder andere Lagenabdeckung (37) benutzt werden. Sie kann ferner mit einer Lagenabdeckung (37) und ohne einen Boden- oder Zwischenlage (19,20) eingesetzt werden.

Die Saugglocke (25) kann wie in den vorbeschriebenen Ausführungsbeispielen ausgebildet und mit einer Kopfplatte (31) versehen sein, welche eine oder mehrere Saugöffnungen (40) zumindest im Innenbereich für den Durchtritt von Luft aus dem Lagenaufnahmeraum (44) in den Saugraum (43) aufweist. Der Anschluss (33) für den Unterdruckerzeuger (32) kann auch hier am Dom bzw. am Saugraum (43) der Haube (26) angeordnet sein. Auch die Größenabstimmungen der Haubenöffnung (28) auf die Größe der Lage (4) und des Zwischenbodens (19) können die gleichen wie in den Varianten von Figur 2,3 und 8,9 sein.

Im Unterschied zu den vorbeschriebenen Ausführungsbeispielen hat die Absaugung (39) der Greifeinrichtung (36) bzw. Lagengreifeinrichtung (23) in Figur 12 und 13 eine Saugöffnung (41) in der seitlichen Haubenwand (27), die sich im Bereich des Lagenaufnahmeraum (44) befindet und hier mündet und von außen mit Unterdruck beaufschlagbar ist. Die Saugöffnung (41) kann mehrfach vorhanden sein und kann sich an einer oder an mehreren Seitenwänden (27') befinden. Über die Saugöffnung(en) (41) kann ebenfalls Luft aus dem Lagenaufnahmeraum (44) abgesaugt und der Lagenaufnahmeraum (44) evakuiert werden.

Zu diesem Zweck ist in der Ausführungsform von Figur 12 und 13 z.B. ein Bypass (42) außenseitig an der Haube (26) angeordnet, der den Saugraum (43) mit dem Lagenaufnahmeraum (44) über einen Saugkanal (46) verbindet. Der Saugkanal (46) geht von der oder den Saugöffnungen (41) aus, wobei er aus dem Haubeninnenraum herausführt, über einen Wandbereich (48) der Haubenwand (27) außen hinweg geführt und dann mit einer Mündung (47) an den Saugraum (43) angeschlossen ist. Der Saugkanal (46) wird z.B. von einer außenseitig aufgesetzten gewölbten Kappe (45) gebildet, die die Wandöffnungen (41,47) überdeckt und mit der Haubenwand (27) verbunden, z.B. verschraubt ist.

Der seitliche Bypass (42) an der Haube (26) kann an einer oder an mehreren Seitenwänden (27') angeordnet sein. Er kann insbesondere ringartig die Haube (26) umgeben. Die Saugöffnung(en) (41) und die Mündungsöffnungen (47) können übereinander liegen und vom stegartigen Wandbereich (48) distanziert sein. Sie können jeweils in mindestens einer Reihe mit Abstand in Haubenumfangsichtung hintereinander liegen und können insbesondere eine längliche Form haben.

Eine auf der Flaschenlage (4) liegende Lagenabdeckung (37) kommt beim Ansaugen der Warenlage (4) in Anschlag mit der hier vorzugsweise stationären Kopfplatte (31) und deckt deren Saugöffnungen (40) nach unten ab. Die ein oder mehreren Saugöffnungen (41) liegen mit einem solchen Abstand unterhalb der Deckplatte (31), dass sie bei angesaugter Lagenabdeckung (37) frei sind. Der im Saugraum (43) herrschende Unterdruck wirkt über den Bypass (42) weiter im Lagenaufnahmeraum (44) und saugt die hier befindliche Luft ab, wodurch die Flaschenlage (4) und ggf. der Zwischenboden (19,20) angesaugt und in der Anlagestellung an der Lagenabdeckung (37) gehalten werden. Die Deckplatte (31) befindet sich in Höhe des Wandbereichs (48) und kann hier ggf. fixiert sein.

In Abwandung der gezeigten Ausführungsform ist es möglich, die Kopfplatte (31) massiv und luftundurchlässig auszubilden, wobei über den Bypass (42) der Lagenaufnahmeraum (44) evakuiert wird. Eine weitere Variante sieht vor, statt oder zusätzlich zu der Kopfplatte (31) einen in Figur 12 gestrichelt angedeuteten randseitigen rähmenartigen Anschlag (49) an der Innenseite der Haubenwand (27) vorzusehen, gegen den sich die Lagenabdeckung (37) legt. Des weiteren ist es möglich, die gezeigte Absaugung (39) durch Anordnung eines Anschlusses (33) an der oder den Saugöffnung(en) (41) in der Haubenwand (27) zu bilden und einen Bypass (42) hierdurch zu ersetzen oder ggf. zu ergänzen. Die Saugöffnung(en) (41) kann mit dem vorhandenen oder mit einem zusätzlichen Unterdruckerzeuger (32) verbunden werden. Außerdem kann bei einer solchen Seiten-Absaugung (39) über eine oder mehrere Saugöffnung(en) (41) der Saugraum (43) entfallen.

Ferner kann der Bypass (42) variieren und kann z.B. innerhalb der Haube (26) angeordnet sein. Ein solcher Bypass (nicht dargestellt) kann z.B. im Randbereich einer luftpermeablen und bis zur Haubenwand (27) reichenden Kopfplatte (31) gebildet werden. Die Kopfplatte (31) kann an einer oder mehreren Seiten größer als die in geeigneter Weise zentrierte Lagenabdeckung (37) sein, wodurch ein oder mehrere randseitige Saugbereiche bzw. Saugspalte gebildet werden, an denen neben der Lagenabdeckung (37) Luft aus dem Lagenaufnahmeraum (44) gesaugt werden kann. An diesen zwischen einer oder mehreren Seitenwänden (27') und der Lagenabdeckung (37) gebildeten Rand-Saugbereichen können die Saugöffnungen (40) in der Deckplatte (31) größer als in deren Innenbereich sein. Auch ein unterbrochener oder auf andere Weise luftdurchlässiger Anschlag (49) kann randseitige Saugbereiche bzw. Saugspalte an der Haubenwand (27) bilden. Außerdem können die seitlichen Abstände der Warenlage (4) zu ein oder mehreren Seitenwänden (27') größer als in den gezeigten Ausführungsformen sein, wobei die Positionier- oder Zentriereinrichtung (35) entsprechend angepasst ist.

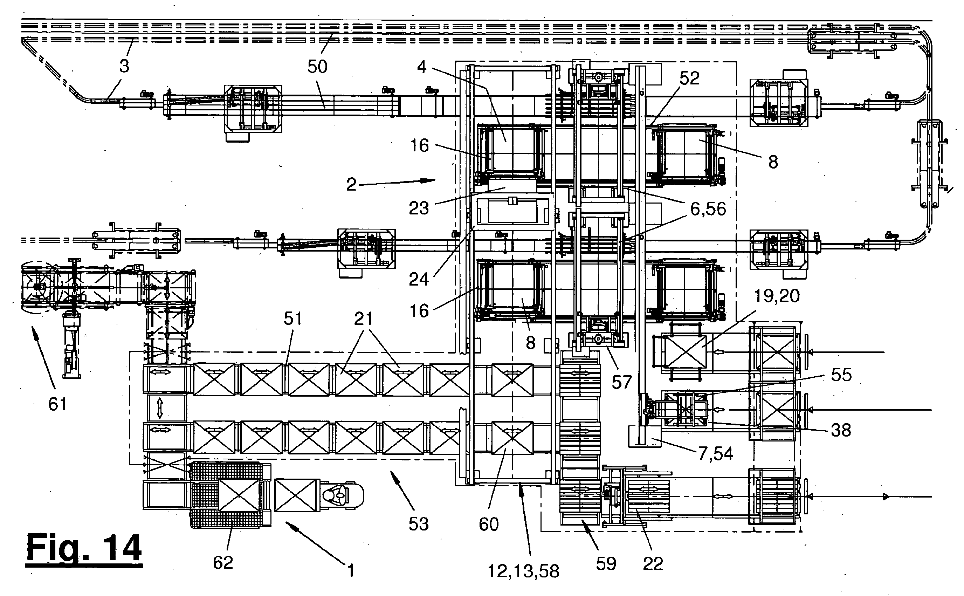

Figur 14 zeigt eine Variante der Flaschenbehandlungsanlage (1) und der Handhabungseinrichtung (2) von Figur 1. Die Handhabungseinrichtung (2) weist hier einen Palettierer (12) und/oder Depalettierer (13) auf, der als Palettierroboter (58) ausgebildet ist. Der Manipulator (24) ist als Linearroboter mit mehreren Linearachsen ausgebildet und trägt die Lagengreifeinrichtung (23). Im Arbeitsbereich des Palettierroboters (58) liegen eine, zwei oder mehr Palettierplätze (60) und Bereitstellungspositionen von einem oder mehreren Trägern (8), die mit einer, zwei oder mehr Fördereinrichtungen (16) fest oder lösbar verbunden sind. Die Fördereinrichtungen (16) sind im gezeigten Ausführungsbeispiel als reversierende Förderer ausgebildet und erstrecken sich mit ihrer bevorzugt linearen Bewegungs- oder Förderbahn (52) quer zur Längsachse des Palettierroboters (58) und seines Portals. Die Fördereinrichtung (16) kann einstöckig oder mehrstöckig sein, wobei Trays (8) in mehreren Stockwerken übereinander angeordnet und bewegbar sind. Die Fördereinrichtung (16) kann konstruktiv als Shuttlewagen ausgebildet sein.

Neben dem Palettierroboter (58) sind eine, zwei oder mehr Umsetzer (6) angeordnet, die hier als Umsetzroboter (56) ausgebildet sind. Jedem Tray-Förder (16) ist hier ein Umsetzroboter (56) zugeordnet, der jeweils einen Portalroboter mit mehreren Linearachsen und einen mehrachsig beweglichen Reihengreifer (57) aufweist. Der oder die Umsetzroboter (56) erstrecken sich jeweils über eine oder mehrere Förderbahnen (52) der Tray-Förderer (16), die im Bereich des Umsetzroboters (56) eine Arbeits- und Positionierstelle für einen Träger (8) haben.

Neben dem Umsetzer (6) ist ein Einleger (7) angeordnet, der als Einlegeroboter (54) ausgebildet ist und der ebenfalls eine oder mehrere Tray-Förderer (16) bedienen kann, die im Roboterarbeitsbereich entsprechende Bereitstellpositionen für einen Tray (8) haben. Der Einlegeroboter (54) ist ebenfalls als Portalroboter mit Linearachsen ausgebildet und besitzt ein mehrachsig verfahrbares Greifwerkzeug (55), mit dem Zwischenböden (19) und/oder Zwischenlagen bzw. Decklagen (20) von einer Bereitstellung gegriffen und zu den Trays (8) gebracht werden können. Desgleichen kann der Einlegeroboter (54) auch Deckel oder Top Frames (38) von einem Stapel aufnehmen und zu den Trägern (8) und den dortigen Warenlagen (4) bringen.

Die Flaschen (4) werden von einer Fördereinrichtung (50) in einer oder mehreren Reihen der Handhabungseinrichtung (2) zugeführt. Der Umsetzroboter (56) übernimmt mit seinem Reihengreifer (57) eine oder mehrere Reihen und setzt sie auf einen bereit gestellten Träger (8), in den vorher der Einlegeroboter (54) einen Zwischenboden (19) gelegt hat. Sobald die fertige Lage (4) gebildet ist, fährt der Träger (8) in die Bereitstellungsposition am Palettierroboter (58), der mit seiner Lagengreifeinrichtung (23) die Waren- oder Flaschenlage (4) mit dem Zwischenboden (19) aufnimmt und zum Palettierplatz (60) transportiert und dort die Palette (21) aufbaut. Der leere Träger (8) fährt zurück zur Bereitstellungsposition am Einlegeroboter (54) und nimmt dort eine neue Zwischenlage (19) auf, wonach er zur Bereitstellposition am Umsetzroboter (56) bewegt und erneut mit einer Flaschenlage (4) beladen wird. Der Zyklus startet dann erneut. Wenn die letzte Flaschenlage (4) im Palettenstapel (21) gebildet wird, fährt der Tray (8) nach Aufnahme der Flaschenlage (4) erst noch einmal zurück zum Einlegeroboter (54), der eine Decklage (20) und ggf. einen Deckel bzw. Top Frame (38) auflegt. Erst danach wird der Tray (8) zum Palettierroboter (58) transportiert und von diesem zur Fertigstellung des Palettenstapels (21) aufgenommen.

Der Palettierroboter (58) kann mehrere Trayförderer (16) bzw. Trays (8) und mehrere Palettierplätze (60) bedienen, sodass die Prozesszeiten überschnitten werden können. Wenn ein Tray (8) gerade mit einer Flaschenlage (4) beladen wird, kann der Palettierroboter (58) einen inzwischen bereitstehenden anderen Träger (8) entladen und einen Palettenstapel (21) bilden. Eine entsprechende Funktion ergibt sich für den Umsetzer (6) und den Einleger (7).

Die Palettenböden (22) werden von einer Palettenzuführung (59) bereit gestellt und zu den Palettierplätzen (60) gebracht. Hier schließt sich eine Fördereinrichtung (51) für die Paletten (21) an. Diese kann mehrere beladene Paletten (21) aufnehmen und kann auch mehrere ggf. untereinander verbundene Förderstränge haben. Auf der Fördereinrichtung (51) kann hierdurch ein Zwischenlager oder Puffer (53) für palettierte Flaschen (3) oder andere Waren gebildet werden.

Die Handhabungseinrichtung (2) kann in der vorbeschriebenen Weise auch als Depalettierer (13) eingesetzt werden, mit dem zurückgebrachte Paletten (21) wieder depalettiert werden, wobei die Flaschen (3) vom Umsetzer auf die Fördereinrichtung (50) reihenweise umgesetzt werden.

In der Ausführungsform von Figur 14 kann das Palettenlager (53) das Tray-Lager (11) von Figur 1 ersetzen oder kann ein solches Tray-Lager (11) ggf. ergänzen. Eine solche Puffer- oder Lagerfunktion ist nützlich, wenn ein in der Anlage 1 befindlicher Flaschenerzeuger, z.B. eine Blasmaschine (nicht dargestellt), eine höhere Produktionskapazität als eine Fülleinrichtung (nicht dargestellt) hat oder andere Prozesszeiten besitzt.

Mit der in Figur 14 dargestellten Handhabungseinrichtung (2) können ferner anderweitig hergestellte Flaschen (3), z.B. Altglas oder Neuglas, in palettierter Form zugeführt und für die anschließende Befüllung depalettiert und vereinzelt werden. Hierfür kann z.B. an die Palettenfördereinrichtung (51) eine Entpackungseinrichtung (62) angeschlossen sein. Andererseits können mit der gezeigten Handhabungseinrichtung (2) gefüllte Flaschen palettiert und nach Durchlaufen einer schematisch angedeuteten Verpackungseinrichtung (61) gelagert oder abtransportiert werden.

Abwandlungen der gezeigten und beschriebenen Ausführungsformen sind in verschiedener Weise möglich. Die Saugglocke (25) kann weitere Einrichtungen aufweisen, z.B. Dichtlippen oder dgl. Sie kann ferner zur Anpassung an unterschiedliche Formen und Größen der Warenlagen (4) wechselbar sein. Sie kann alternativ in sich verstellbar sein. Hierfür können beispielsweise in der Haube (26) Trennwände oder dgl. zur Bildung kleinerer Haubenbereiche für Teillagen angeordnet sein. Die Haubenbereiche können auch saugtechnisch voneinander abgeschottet und einzeln steuerbar bzw. regelbar sein.

Die Lagengreifeinrichtung (23) kann in Abwandlung von Figur 1 zum Entladen der Träger (8) und zur Abgabe der Lagen (4) auf einen Förderer oder eine stationäre Abgabestelle benutzt werden. Sie bildet dabei eine Entladeeinrichtung. Sie kann alternativ auch zum Beladen von Trägern (8) mit Waren- oder Flaschenlagen (4) benutzt werden.

Die Lagengreifeinrichtung (23) kann benutzt werden, um beliebige Ladungsträger, insbesondere Kisten, Gitterboxen etc. mit Warenlagen (4) nebst Zwischenlagen (20) und ggf. einer Lagenabdeckung (37), z.B. auch einem Kisten- oder Boxdeckel, zu be- und entladen. Hierbei können auch mehrere Warenlagen (4) übereinander gestapelt werden.

In weiterer Variation zu Figur 1 kann ein Träger (8) eine oder mehrere bewegliche Seitenwände (10) haben, die das Entladen und die Zustellung der Saugglocke (25) erleichtern. Im Träger (8) kann bei der Anordnung von Figur 2,3 und 8,9 für einen externen Luftzutritt zum Haubenrand (29) und unter den Zwischenboden (19,20) gesorgt werden. Der Trägerboden (9) kann ferner so gestaltet sein, dass Außenluft unter den Zwischenboden (19,20) beim Anheben nachströmen kann, indem der Trägerboden (9) z.B. einen erhabenen Sockel, Distanzrippen, Noppen oder dgl. aufweist. Die Saugglocke (25) kann auch mit einem kleinen Abstand über dem Trägerboden (9) gehalten werden. Sie kann ferner höhenverstellbare und z.B. teleskopierbare Seitenwände (27') haben. Dies erlaubt z.B. eine Haubenanpassung an unterschiedliche Höhen der Warenlage (4). Am unteren Haubenrand (29) kann ein flexibles Element angeordnet sein, das sich beim Ansaugen zum Zwischenboden (19,20) hin verformt und den Freiraum (3) schließt und weitgehend abdichtet.

Die gezeigte Handhabungseinrichtung (2) mit dem mehrachsigen Umsetzer (6) zum reihenweisen Greifen und definierten Umsetzen von Flaschen (3) auf Träger (8) und zurück hat besondere Vorteile für die sichere Handhabung und Führung der Flaschen (3). Außerdem kann durch einen Trägertransport zwischen einem Palettierer/Depalettierer (12,13), einem Umsetzer (6) und einem Einleger (7) der Funktionsablauf optimiert werden.

Alternativ kann die Lagengreifeinrichtung (23), auch in Verbindung mit einem konventionellen Palettierer oder Depalettierer ohne Träger eingesetzt werden. Die Waren, insbesondere Flaschen (3), können dabei in üblicher Weise über einen Reihenförderer auf eine bereitgelegte Zwischenlage (20) geschoben oder in anderer Weise gebracht werden, wobei nach und nach die Lage (4) gebildet wird. Bei einer solchen konventionellen Palettiertechnik ist der Einsatz der erfindungsgemäßen Greifeinrichtung (36) von Figur 12 und 13 für die gemeinsame Aufnahme einer Warenlage (4) mit Zwischenlage (20) und Lagenabdeckung (37) von Vorteil. Günstig ist aber auch der Einsatz eines Lagengreifers bzw. einer Saugglocke (25) in der Ausführung von Figur 2 und 3, bei der die Haubenöffnung (28) größer als die Warenlage (4) und die Zwischenlage (20) ist, wobei die Zwischenlage (20) in den Haubeninnenraum bzw. Lagenaufnahmeraum (44) miteingesaugt wird.

Die Lagengreifeinrichtung (23) kann in ihrer Ausbildung als Palettierer (12) oder als Depalettierer (13) oder als Schiebeeinrichtung (15) und auch als Lader/Entlader eigenständig konzipiert und angeordnet sein. Sie muss nicht Bestandteil der eingangs beschriebenen Handhabungseinrichtung (2) oder der Anlage (1) sein. Die Ausbildung der Lagengreifeinrichtung (23) hat insofern eine eigenständige erfinderische Bedeutung.

Die Lagengreifeinrichtung (23) kann alternativ zu den gezeigten Ausführungsformen Warenlagen (4) auch ohne Boden- öder Zwischenlage (20) greifen, transportieren und handhaben. Die seitliche Haubenwand (27) kann ferner eine verkürzte Höhe aufweisen und muss nicht bis zur Unterseite der Warenlage (4) reichen. Die Lagengreifeinrichtung (23) kann ferner zum eigenständigen Transport von einer Zwischenlage oder Bodenlage (20) und/oder einer Lagenabdeckung (37) ohne Warenlage (4) benutzt werden. Hierdurch kann zum Palettieren zuerst eine Bodenlage (20) auf dem Palettenboden (22) aufgelegt und danach eine Lagenabdeckung (37) gegriffen sowie direkt anschließend eine Warenlage (4) ohne Boden- oder Zwischenlage (20) aufgenommen und palettiert werden. Entsprechendes gilt für das Depalettieren. Auf Zwischenböden (19) oder Zwischenlagen (20) in Trägern (8) und auf einen Einleger (7) hierfür kann verzichtet werden.

Die Positionier- oder Zentriereinrichtung (35) hat eigenständige erfinderische Bedeutung und kann auch bei anderen Lagengreifeinrichtungen (23) mit Haubenuntermaß gegenüber einer Boden- oder Zwischenlage (20) gemäß des Ausführungsbeispiel von Figur 8 und 9 eingesetzt werden. Die Positionier- oder Zentriereinrichtung (35) kann auch bei konventionellen Lagengreifeinrichtungen mit Saugglocke, z.B. gemäß der eingangs genannten US-Schriften eingesetzt werden. Ferner hat auch die Handhabungseinrichtung (2) mit Trägern (8) und einer Lagengreifeinrichtungen (23) gemäß des Ausführungsbeispiels von Figur 8 und 9 mit der an den Haubenrand (28) ansaugbaren Boden- oder Zwischenlage (19, 20) eigenständige erfinderische Bedeutung.

Ansonsten können die Merkmale der Ausführungsbeispiele beliebig miteinander kombiniert und auch untereinander vertauscht werden. Z.B. kann auch bei der Variante von Figur 2 und 3 eine höhenverstellbare Kopfplatte (31) vorhanden sein.

### BEZUGSZEICHENLISTE

- 1: Anlage, Flaschenbehandlungsanlage
- 2: Handhabungseinrichtung
- 3: Ware, Lagengut, Flasche
- 4: Warenlage, Flaschenlage
- 5: Zwischenraum
- 6: Umsetzer
- 7: Einleger, Roboter
- 8: Träger, Tray
- 9: Boden, Trägerboden
- 10: Seitenwand, Trägerwand
- 11: Lager, Puffer
- 12: Palettierer
- 13: Depalettierer
- 14: Schiebeeinrichtung
- 15: Lagenschieber
- 16: Fördereinrichtung für Träger
- 17: Fördereinrichtung
- 18: Halteeinrichtung, Saugeinrichtung
- 19: Zwischenboden
- 20: Zwischenlage, Decklage
- 21: Palette, Palettenstapel
- 22: Palettenboden
- 23: Lagengreifeinrichtung
- 24: Manipulator
- 25: Saugglocke, Lagengreifer,
- 26: Haube
- 27: Haubenwand
- 27': Seitenwand
- 28: Haubenöffnung
- 29: Haubenrand
- 30: Freiraum
- 31: Kopfplatte
- 32: Unterdruckerzeuger, Saugeinrichtung
- 33: Anschluss
- 34: Sensor
- 35: Positioniereinrichtung, Zentriereinrichtung
- 36: Greifeinrichtung
- 37: Lagenabdeckung
- 38: Deckel, Top Frame
- 39: Absaugung, Saugstelle
- 40: Saugöffnung im Innenbereich der Kopfplatte
- 41: Wandöffnung, Saugöffnung in Haubenwand
- 42: Bypass
- 43: Saugraum
- 44: Lagenaufnahmeraum, Lagenraum
- 45: Kappe
- 46: Saugkanal
- 47: Wandöffnung, Mündung
- 48: Wandbereich
- 49: Anschlag
- 50: Fördereinrichtung für Flaschen
- 51: Fördereinrichtung für Paletten
- 52: Förderbahn
- 53: Lager
- 54: Einlegeroboter
- 55: Greifwerkzeug
- 56: Umsetzroboter
- 57: Reihengreifer
- 58: Palettierroboter
- 59: Palettenzuführung
- 60: Palettierplatz
- 61: Verpackungseinrichtung
- 62: Entpackungseinrichtung
- 63: Stellelement, expansionsfähig, Schlauch
- 64: Stellelement, ausfahrbar, Klemmbalken
- 65: Stellantrieb, Zylinder

- a: Abstand

## Patentansprüche

1. Lagengreifeinrichtung für Warenlagen (4) aus jeweils nebeneinander gestellten Waren (3), insbesondere Flaschen, mit einer über eine Warenlage (4) stülpbaren Saugglocke (25), die eine offene Haube (26) mit einer Haubenöffnung (28) und einer Absaugung (39) aufweist, wobei die Haube (26) einen Lagenaufnahmeraum (44), eine den Lagenaufnahmeraum (44) seitlich umgebende, formstabile Haubenwand (27) und eine an der Haubenunterseite angeordnete Haubenöffnung (28) aufweist, die größer als die Warenlage (4) ist, **dadurch gekennzeichnet, dass** die Haubenöffnung (28) größer als eine unter und/oder über der Warenlage (4) befindliche Boden- oder Zwischenlage (20) und/oder Lagenabdeckung (37) ist wobei die Saugglocke (25) an der seitlichen Haubenwand (27) einen Bypass (42) aufweist, der den Lagenaufnahmeraum (44) unterhalb einer Kopfplatte (31) oder eines Anschlags (49) der Saugglocke (25) mit einem darüber befindlichen Saugraum (43) verbindet.

2. Lagengreifeinrichtung nach Anspruch 1, **dadurch gekennzeichnet, dass** die Lagengreifeinrichtung (23) als Greifeinrichtung (36) für eine Warenlage (4) mitsamt einer Boden- oder Zwischenlage (20) und/oder einer Lagenabdeckung (37) ausgebildet ist, wobei bei Anlegen von Unterdruck in der Haube (26) die Warenlage (4) und die Boden- oder Zwischenlage (20) und/oder die Lagenabdeckung (37) in die Haube (26) eingesaugt werden.

3. Lagengreifeinrichtung nach Anspruch 1 oder 2, **dadurch gekennzeichnet, dass** die Lagengreifeinrichtung (23) einen an der Haube (26) angeschlossenen (33), insbesondere einen an der Saugglocke (25) angeordneten und mitbewegbaren regelbaren Unterdruckerzeuger (32) aufweist, der mit einem Sensor (34) in der Haube (26) zur Ermittlung des Haubendrucks verbunden ist.

4. Lagengreifeinrichtung nach einem der vorhergehenden Ansprüche, **dadurch gekennzeichnet, dass** die Saugglocke (25) eine haubeninterne, die aufgenommene Warenlage (4) übergreifende, luftpermeable Kopfplatte (31) und/oder einen haubeninternen, die Warenlage (4) rahmenartig übergreifenden, luftpermeablen Anschlag (49) aufweist.

5. Lagengreifeinrichtung nach einem der vorhergehenden Ansprüche, **dadurch gekennzeichnet, dass** eine haubeninterne Kopfplatte (31) höhenverstellbar angeordnet ist.

6. Lagengreifeinrichtung nach einem der vorhergehenden Ansprüche, **dadurch gekennzeichnet, dass** die seitliche Haubenwand (27) mehrere starre oder bewegliche, insbesondere verstellbare, Seitenwände (27') aufweist.

7. Lagengreifeinrichtung nach einem der vorhergehenden Ansprüche, **dadurch gekennzeichnet, dass** in der Haube (26) eine Positionier- oder Zentriereinrichtung (35) angeordnet ist.

8. Lagengreifeinrichtung nach Anspruch 7, **dadurch gekennzeichnet, dass** die Positionier-oder Zentriereinrichtung (35) ein oder mehrere bewegliche und an eine aufgenommene Warenlage (4) zustellbare Stellelemente (63,64) mit einem Stellantrieb (65) aufweist, wobei die beweglichen Stellelementen (63,64) an der Innenseite von einer oder mehreren Seitenwänden (27), insbesondere gegenüberliegend, angeordnet sind.

9. Lagengreifeinrichtung nach einem der Ansprüche 7 oder 8, **dadurch gekennzeichnet, dass** die Positionier- oder Zentriereinrichtung (35) steuerbar oder regelbar, insbesondere hinsichtlich des Weges und/oder der Kraft, ausgebildet ist.

10. Lagengreifeinrichtung nach einem der vorhergehenden Ansprüche, **dadurch gekennzeichnet, dass** die Lagengreifeinrichtung (23) einen mehrachsig beweglichen Manipulator (24) aufweist und als Palettierer (12) und/oder als Depalettierer (13) ausgebildet ist.

11. Lagengreifeinrichtung nach einem der vorhergehenden Ansprüche, **dadurch gekennzeichnet, dass** die Lagengreifeinrichtung (23) für leere Flaschen (3), insbesondere Kunststoffflaschen, oder für quaderförmige Behälter ausgebildet ist.

12. Handhabungseinrichtung für Waren (3), insbesondere Flaschen, mit ein oder mehreren beweglichen Trägern (8) zur Aufnahme von einer Warenlage (4), **dadurch gekennzeichnet, dass** die Handhabungseinrichtung (2) eine Lagengreifeinrichtung (23) nach mindestens einem der Ansprüche 1 bis 11 aufweist.

13. Handhabungseinrichtung nach Anspruch 12, **dadurch gekennzeichnet, dass** im Träger (8) ein lösbarer Zwischenboden (19) unter der Warenlage (4) angeordnet ist, wobei die Lagengreifeinrichtung (23) die Warenlage (4) mitsamt dem Zwischenboden (19) mit Unterdruck greift und der Zwischenboden (19) als Zwischenlage (20) im Palettenstapel (21) vorgesehen ist.

14. Verfahren zum Handhaben von Warenlagen (4) aus jeweils nebeneinander gestellten Waren (3), insbesondere Flaschen, mit einer Lagengreifeinrichtung (23), die eine Saugglocke (25) mit einer offenen Haube (26) und einer Absaugung (39) aufweist, die mit einer Haubenöffnung (28) über eine Warenlage (4) gestülpt wird und die Warenlage (4) mit Unterdruck hält, wobei die Haube (26) einen Lagenaufnahmeraum (44), eine den Lagenaufnahmeraum (44) seitlich umgebende, formstabile Haubenwand (27) und eine an der Haubenunterseite angeordnete Haubenöffnung (28) aufweist, die größer als die Warenlage (4) ist, **dadurch gekennzeichnet, dass** die Haubenöffnung (28) größer als eine unter und/oder über der Warenlage (4) befindliche Boden- oder Zwischenlage (20) und/oder Lagenabdeckung (37) ist, wobei bei Anlegen von Unterdruck in der Haube (26) die Warenlage (4) und die Boden- oder Zwischenlage (20) und/oder die Lagenabdeckung (37) in die Haube (26) eingesaugt werden, und wobei die Saugglocke (25) an der seitlichen Haubenwand (27) einen Bypass (42) aufweist, der den Lagenaufnahmeraum (44) unterhalb einer Kopfplatte (31) oder eines Anschlags (49) der Saugglocke (25) mit einem darüber befindlichen Saugraum (43) verbindet.

## Claims

1. Layer-acquiring installation for goods layers (4) of goods (3) which are in each case placed beside one another, in particular for bottles, having a suction cup (25) which is fittable over a goods layer (4) and which has an open hood (26) having a hood opening (28) and an extraction by suction (39), wherein the hood (26) has a layer-receptacle space (44), a dimensionally stable hood wall (27) which laterally surrounds the layer-receptacle space (44), and a hood opening (28) which is disposed on the lower hood side and which is larger than the goods layer (4), **characterized in that** the hood opening (28) is larger than a floor or intermediate layer (20) and/or a layer cover (37) which are/is located below and/or above the goods layer (4), wherein the suction cup (25) on the lateral hood wall (27) has a bypass (42) which connects the layer-receptacle space (44) below a head plate (31) or a stop (49) of the suction cup (25) to a suction space (43) located thereabove.

2. Layer-acquiring installation according to Claim 1, **characterized in that** the layer-acquiring installation (23) is configured as a gripping installation (36) for a goods layer (4) including a floor or intermediate layer (20) and/or a layer cover (37), wherein the goods layer (4) and the floor or intermediate layer (20) and/or the layer cover (37) are sucked into the hood (26) when negative pressure is applied in the hood (26).

3. Layer-acquiring installation according to Claim 1 or 2, **characterized in that** the layer-acquiring installation (23) has a conjointly movable and regulatable negative-pressure generator (32) which is connected to the hood (26), in particular is disposed on the suction cup (25), and which for determining the hood pressure is connected to a sensor (34) in the hood (26).

4. Layer-acquiring installation according to one of the preceding claims, **characterized in that** the suction cup (25) has an air-permeable head plate (31) which is internal to the hood and engages across the received goods layer (4), and/or has an air-permeable stop (49) which is internal to the hood and which engages in the manner of a frame across the goods layer (4).

5. Layer-acquiring installation according to one of the preceding claims, **characterized in that** a head plate (31) which is internal to the hood is disposed in a height-adjustable manner.

6. Layer-acquiring installation according to one of the preceding claims, **characterized in that** the lateral hood wall (27) has a plurality of rigid or movable, in particular adjustable side walls (27').

7. Layer-acquiring installation according to one of the preceding claims, **characterized in that** a positioning or centring installation (35) is disposed in the hood (26).

8. Layer-acquiring installation according to Claim 7, **characterized in that** the positioning or centring installation (35) has one or a plurality of movable actuator elements (63, 64) which are placeable toward a received goods layer (4) and have an actuating drive (65), wherein the movable actuator elements (63, 64) are disposed on the internal side of one or a plurality of lateral walls (27), in particular in a mutually opposite manner.

9. Layer-acquiring installation according to one of Claims 7 and 8, **characterized in that** the positioning or centring installation (35) is configured so as to be controllable or regulatable, in particular in terms of travel and/or force.

10. Layer-acquiring installation according to one of the preceding claims, **characterized in that** the layer-acquiring installation (23) has a manipulator (24) which is movable along multiple axes and is configured as a palletizer (12) and/or as a de-palletizer (13).

11. Layer-acquiring installation according to one of the preceding claims, **characterized in that** the layer-acquiring installation (23) is configured for empty bottles (3), in particular for plastic bottles, or for ashlar-shaped containers.

12. Handling installation for goods (3), in particular for bottles, having one or a plurality of movable carriers (8) for receiving a goods layer (4), **characterized in that** the handling installation (2) has a layer-acquiring installation (23) according to at least one of Claims 1 to 11.

13. Handling installation according to Claim 12, **characterized in that** a releasable intermediate base (19) is disposed in the carrier (8) below the goods layer (4), wherein the layer-acquiring installation (23) by way of negative pressure grips the goods layer (4) including the intermediate base (19), the intermediate base (19) being provided as an intermediate layer (20) in the pallet stack (21).

14. Method for handling goods layers (4) of goods (3), in particular bottles, which are in each case placed beside one another, using a layer-acquiring installation (23) having a suction cup (25) which has an open hood (26) and an extraction by suction (39), which suction cup by way of a hood opening (28) is fitted over a goods layer (4) and by way of negative pressure holds the goods layer (4), wherein the hood (26) has a layer-receptacle space (44), a dimensionally stable hood wall (27) which laterally surrounds the layer-receptacle space (44), and a hood opening (28) which is disposed on the lower hood side and which is larger than the goods layer (4), **characterized in that** the hood opening (28) is larger than a floor or intermediate layer (20) and/or a layer cover (37) which are/is located below and/or above the goods layer (4), wherein the goods layer (4) and the floor or intermediate layer (20) and/or the layer cover (37) are sucked into the hood (26) when negative pressure is applied in the hood (26), and wherein the suction cup (25) on the lateral hood wall (27) has a bypass (42) which connects the layer-receptacle space (44) below a head plate (31) or a stop (49) of the suction cup (25) to a suction space (43) located thereabove.

## Revendications

1. Dispositif de saisie de couche pour des couches de produits (4) composées de produits respectivement juxtaposés (3), en particulier de bouteilles, avec une cloche aspirante (25) pouvant coiffer une couche de produits (4), qui présente une hotte ouverte (26) avec une ouverture de hotte (28) et une aspiration (39), dans lequel la hotte (26) présente une chambre de réception de couche (44), une paroi de hotte (27) de forme stable entourant latéralement la chambre de réception de couche (44) et une ouverture de hotte (28) disposée sur le côté inférieur de la hotte, qui est plus grande que la couche de produits (4), **caractérisé en ce que** l'ouverture de hotte (28) est plus grande qu'une couche de base ou intermédiaire (20) se trouvant en dessous et/ou au-dessus de la couche de produits (4) et/ou qu'un recouvrement de couche (37), dans lequel la cloche aspirante (25) présente sur la paroi latérale de hotte (27) une dérivation (42), qui relie la chambre de réception de couche (44) en dessous d'une plaque de tête (31) ou d'une butée (49) de la cloche aspirante (25) avec une chambre d'aspiration (43) se trouvant au-dessus de celle-ci.

2. Dispositif de saisie de couche selon la revendication 1, **caractérisé en ce que** le dispositif de saisie de couche (23) est réalisé sous forme de dispositif de saisie (36) pour une couche de produits (4) avec une couche de base ou une couche intermédiaire (20) et/ou un recouvrement de couche (37), dans lequel, lors de l'application d'une dépression dans la hotte (26), la couche de produits (4) et la couche de base ou la couche intermédiaire (20) et/ou le recouvrement de couche (37) sont aspirés dans la hotte (26).

3. Dispositif de saisie de couche selon la revendication 1 ou 2, **caractérisé en ce que** le dispositif de saisie de couche (23) présente un générateur de dépression (32) réglable (33) raccordé à la hotte (26), en particulier disposé sur la cloche aspirante (25) et mobile avec elle, qui est relié à un capteur (34) dans la hotte (26) pour la détermination de la pression dans la hotte.

4. Dispositif de saisie de couche selon l'une quelconque des revendications précédentes, **caractérisé en ce que** la cloche aspirante (25) présente une plaque de tête (31) interne à la hotte, saisissant la couche de produits reprise (4) et perméable à l'air et/ou une butée (49) interne à la hotte, saisissant en forme de cadre la couche de produits (4) et perméable à l'air.

5. Dispositif de saisie de couche selon l'une quelconque des revendications précédentes, **caractérisé en ce qu'**une plaque de tête (31) interne à la hotte est réglable en hauteur.

6. Dispositif de saisie de couche selon l'une quelconque des revendications précédentes, **caractérisé en ce que** la paroi latérale de hotte (27) présente plusieurs parois latérales (27') rigides ou mobiles, en particulier réglables.

7. Dispositif de saisie de couche selon l'une quelconque des revendications précédentes, **caractérisé en ce qu'**un dispositif de positionnement ou de centrage (35) est disposé dans la hotte (26).

8. Dispositif de saisie de couche selon la revendication 7, **caractérisé en ce que** le dispositif de positionnement ou de centrage (35) présente un ou plusieurs élément(s) de réglage (63, 64) mobile(s) et applicable(s) à une couche de produits reprise (4) avec un entraînement de réglage (65), dans lequel les éléments de réglage mobiles (63, 64) sont disposés, en particulier l'un en face de l'autre, sur le côté intérieur d'une ou de plusieurs paroi (s) latérale (s) (27).

9. Dispositif de saisie de couche selon l'une quelconque des revendications 7 ou 8, **caractérisé en ce que** le dispositif de positionnement et de centrage (35) peut être commandé ou réglé, en particulier en ce qui concerne la course et/ou la force.

10. Dispositif de saisie de couche selon l'une quelconque des revendications précédentes, **caractérisé en ce que** le dispositif de saisie de couche (23) présente un manipulateur (24) mobile suivant plusieurs axes et est réalisé sous forme de palettiseur (12) et/ou de dépalettiseur (13).

11. Dispositif de saisie de couche selon l'une quelconque des revendications précédentes, **caractérisé en ce que** le dispositif de saisie de couche (23) est configuré pour des bouteilles vides (3), en particulier des bouteilles en plastique, ou pour des récipients parallélépipédiques.

12. Dispositif de manipulation pour des produits (3), en particulier des bouteilles, avec un ou plusieurs support(s) (8) pour recevoir une couche de produits (4), **caractérisé en ce que** le dispositif de manipulation (2) présente un dispositif de saisie de couche (23) selon au moins une des revendications 1 à 11.

13. Dispositif de manipulation selon la revendication 12, **caractérisé en ce qu'**un fond intermédiaire séparable (19) est disposé dans le support (8) en dessous de la couche de produits (4), dans lequel le dispositif de saisie de couche (23) saisit sous dépression la couche de produits (4) avec le fond intermédiaire (19) et le fond intermédiaire (19) est prévu comme couche intermédiaire (20) dans la pile de palettes (21).

14. Procédé de manipulation de couches de produits (4) composées de produits respectivement juxtaposés (3), en particulier de bouteilles, avec un dispositif de saisie de couche (23), qui présente une cloche aspirante (25) avec une hotte ouverte (26) et une aspiration (39), qui coiffe la couche de produits (4) avec une ouverture de hotte (28) et qui maintient la couche de produits (4) avec une dépression, dans lequel la hotte (26) présente une chambre de réception de couche (44), une paroi de hotte (27) de forme stable, entourant latéralement la chambre de réception de couche (44) et une ouverture de hotte (28) disposée sur le côté inférieur de la hotte, qui est plus grande que la couche de produits (4), **caractérisé en ce que** l'ouverture de hotte (28) est plus grande qu'une couche de base ou intermédiaire (20) se trouvant en dessous et/ou au-dessus de la couche de produits (4) et/ou qu'un recouvrement de couche (37), dans lequel, lors de l'application d'une dépression dans la hotte (26), la couche de produits (4) et la couche de base ou intermédiaire (20) et/ou le recouvrement de couche (37) sont aspirés dans la hotte (26), et dans lequel la cloche aspirante (25) présente sur la paroi latérale de hotte (27) une dérivation (42), qui relie la chambre de réception de couche (44) en dessous d'une plaque de tête (31) ou d'une butée (49) de la cloche aspirante (25) avec une chambre d'aspiration (43) se trouvant au-dessus de celle-ci.
